Europäisches Patentamt

European Patent Office

Office européen des brevets

(11) Veröffentlichungsnummer: **0 432 802 A2**

(12) **EUROPÄISCHE PATENTANMELDUNG**

(21) Anmeldenummer: 90124244.6

(51) Int. Cl.5: **G06F 9/45**

(22) Anmeldetag: **14.12.90**

(30) Priorität: **15.12.89 US 451493**

(43) Veröffentlichungstag der Anmeldung:
**19.06.91 Patentblatt 91/25**

(84) Benannte Vertragsstaaten:
**AT BE CH DE ES FR GB IT LI NL SE**

(71) Anmelder: **Siemens Aktiengesellschaft**
**Wittelsbacherplatz 2**

W-8000 München 2(DE)

(72) Erfinder: **Platoff, Michael, A.**
**2151 Ash Court**
**Monmouth Junction, NJ 08852(US)**
Erfinder: **Wagner, Michael, E.**
**21 Crest Avenue**
**Trenton, NJ 08638(US)**

(54) **Verfahren für die automatische Syntaxanalyse (Parsen) des Textes von Computer-Programmen in Kompilierern.**

(57) Zur Ermittlung und Darstellung der Struktur von Programmen, die wie in C Präprozessor-Anweisungen und Erweiterungen gegenüber der abstrakten Syntaxbaum-Darstellung aufweisen, wird ein modifizierter Parser-Generator mit zugehöriger Parser-Verwaltung verwendet, wobei mehrere Parser-Prozeduren denselben Eingabestrom vom Token verarbeiten und zusätzliche Operationen zum Abspalten neuer Parserprozeduren und zum Zusammenführen von aufgespaltenen Parser-Prozeduren sowie zum Austausch einer Parser-Prozedur für den einen Zweig einer bedingten Kompilierungsanweisung durch die Parser-Prozeduren für den anderen Verzweigungspfad beim Auftreten von vorgegebenen bedingten Kompilierungsanweisungen ausgeführt werden. Welche der Parser-Prozeduren jeweils durch den Parsergenerator laufen soll. besstimmt die Parserverwaltung, wobei der jeweilige Statur der einzelnen Parser-Prozeduren in der Parserverwaltung festgehalten wird.

FIG 2

EP 0 432 802 A2

## VERFAHREN FÜR DIE AUTOMATISCHE SYNTAXANALYSE (PARSEN) DES TEXTES VON COMPUTER-PROGRAMMEN IN KOMPILIERERN

Die vorliegende Erfindung bezieht sich ganz allgemein auf die automatische Syntaxanalyse von Programmen: das Parsen und die Darstellung von Computer-Programmen.

Für die Umwandlung von Quellprogrammen in einer symbolischen Programmsprache in entsprechende Zielprogramme einer gewünschten Maschinensprache werden Kompilierer verwendet, die zunächst das Quellprogramm analysieren und dann das entsprechende Zielprogramm erstellen. Im Rahmen der Quellprogrammanalyse ist u.a. eine Syntaxanalyse durchzuführen, um die Struktur des Quellprogramms richtig zu ermitteln und um das Quellprogramm strukturiert für die Weiterverarbeitung darzustellen, wozu sogenannte Parser verwendet werden, man siehe z.B. Jean Paul Tremblay und Paul G. Sorenson: "The Theory and Practice of Compiler Writing", Mc Graw - Hill Book Company, 1985.

Die vorliegende Erfindung ist vor allem dann sehr nützlich, wenn die Programmiersprache einen relativ lose integrierten Makro-Präprozessor aufweist. Obwohl die Erfindung nicht auf eine bestimmte Sprache beschränkt ist, empfiehlt sich für die vorliegende Erläuterung des Verfahrens die Verwendung der Programmiersprache C als Beispiel einer Sprache, die einen nur wenig integrierten Makro-Präprozessor besitzt - man siehe z.B. Computer Language (USA), Vol. 5, July 1988, Seiten 49 bis 54.

Ein bekannter Nachteil der Programmiersprache C ist die Tatsache, daß der Makro-Präprozessor nur sehr wenig mit der Grammatik von C zu tun hat. Dadurch ergeben sich eine Vielzahl an Problemen für Programmierwerkzeuge in C, zum Beispiel Struktur-Editoren, bildschirmorientierte Programm-Browser, oder Werkzeuge zur Programmumwandlung, in denen die Syntax und Semantik der Prä prozessor-Anweisungen zusammen mit der zugrunde liegenden Programmstruktur berücksichtigt werden soll.

Programmdatenbanken, wie sie in integrierten Programmierumgebungen Verwendung finden, müssen alle Ausgangsinformationen eines Programmtexts enthalten, damit den Programmierern alle strukturellen Informationen zur Verfügung stehen. In vielen dieser Umgebungen werden Syntax und Semantik der Programme häufig in Form von abstrakten Syntaxbäumen dargestellt. Abstrakte Syntaxbäume sind leicht zu erzeugen und zu bearbeiten. Zudem erlauben sie eine brauchbare Wiedergabe der Programmstruktur. Für die Darstellung von Programmen in der Sprache C sind abstrakte Syntaxbäume jedoch nicht ausreichend. Der C-Präprozessor (cpp) unterstützt durch die bedingte Kompilierung und die Makrosubstitution Eigenschaften, die mit einer Baumstruktur nicht beschrieben werden können und auf vorhandene Parser-Methoden nicht anwendbar sind. Zum Beispiel stellt bereits ein Programm mit einer einzigen **#if**-Anweisung im Grunde genommen zwei Programme dar: ein Programm, in dem der Ausdruck der Bedingung zutrifft, und ein weiteres Programm, in dem der Ausdruck nicht zutrifft. Viele Informationen werden durch den Einsatz von cpp entfernt, auf die der Parser später nicht mehr zurückschliessen kann. Aber auch wenn der Parser auf diese Informationen zurückgreifen könnte, wäre es sehr schwierig, diese beiden Aspekte des Programms in einem abstrakten Syntaxbaum darzustellen. Es ist demnach ein "Wald" von Syntaxbäumen zur vollständigen Darstellung erforderlich: ein abstrakter Syntaxgraph. Bei den meisten C-Compilern und deren Hilfsprogrammen werden die Programme zuerst mit einem Makro-Präprozessor verarbeitet. Der daraus erzeugte Text wird anschließend in einer lexikalischen und syntaktischen Analyse weiterverarbeitet. In vieler Hinsicht hat der C-Präprozessor sehr viel dazu beigetragen, daß C als Systemprogrammiersprache so leistungsfähig ist. Die folgende kommentierte Aufstellung der Präprozessor-Anweisungen verdeutlicht die Stärken des Präprozessors und zeigt einige der Schwierigkeiten in der Anwendung auf:

**#define** name token-string
ersetzt nachfolgende Stellen von Name durch Token-String.

**#define** name (arg [, arg] ...) token-string
definiert ein parametrisiertes Makro. Makrodefinitionen bestehen aus einem Makroblock, auf die optional formale Parameter folgen können. Die Definition eines Makroblocks ist eine beliebige Folge von Token. Innerhalb des Makroblocks werden die Parameter bei der Verwendung des Makros an Ort und Stelle durch die im Aufruf des Makros angegebenen Argumente ersetzt.

**#include** "file name"
fügt den Inhalt einer Datei in eine andere Datei ein. Diese Anweisung wird meistens zur Übernahme der Schnittstellendefinitionen anderer Module verwendet.

**#if** constant-expression
schließt bestimmte Textteile einer Quelldatei wahlweise ein oder aus. Die **#if**-Anweisung wertet den Konstantenausdruck aus und übernimmt den Text, der vor der zugehörigen **#else**-, **#elif**- oder **#endif**-Anweisung steht, falls der Ausdruck zutrifft. Durch diese Möglichkeit lassen sich Module erstellen, die über verschiedene Betriebssystemumgebungen und Rechnerarchitekturen portiert werden können. Diese Eigenschaft erlaubt außerdem die bedingte Übernahme verschiedener Eigenschaften in einem Modul.

**#ifdef** name

ist eine ähnliche Anweisung wie **#if**, mit dem Unterschied, daß der Text, der zwischen der nächsten **#else-**, **#elif-** oder **#endif**-Anweisung liegt, nur dann aufgenommen wird, wenn name definiert ist.

Die Integration des Präprozessors in die Phase der Syntaxanaly se wirft verschiedene Probleme auf. Zum Beispiel ist die Grammatik des Präprozessors nicht auf die Grammatik von C abgestimmt. Da die Präprozessor-Anweisungen an jeder beliebigen Stelle zwischen den Programm-Token von C stehen können, lassen sich die beiden Grammatiken nicht miteinander verknüpfen. Zudem führen Anweisungen zur bedingten Kompilierung zwangsläufig zu mehreren Parserbäumen oder Versionen für ein und dasselbe Modul. Idealerweise sollten die syntaktischen und semantischen Informationen dieser dadurch hervorgerufenen Versionen als integrierte Programmstruktur dargestellt werden. In einer integrierten Darstellung der Programmstruktur sollten Makros zum einen einfach als Makros, ähnlich der Syntax von Bezeichnern oder Funktionsaufrufen, zum anderen aber auch in ihren erweiterten Formen zugänglich sein. Eine weitere Schwierigkeit ergibt sich dadurch, daß der Inhalt einer Makrodefinition keine abgeschlossene syntaktische Einheit der zugrundeliegenden C-Grammatik sein muß. Eine syntaktische Einheit kann also auch auf mehrere Dateien verteilt sein.

Im Zusammenhang mit der vorliegenden Erfindung ermöglicht ein modifizierter Parser-Generator die Analyse von Programmen, die wie C-Programme Präprozessor-Anweisungen enthalten und Erweiterungen gegenüber der Darstellung in einem abstrakten Syntaxbaum umfassen, damit eine integrierte Darstellung der Programmstruktur möglich wird.

Im Rahmen der Erfindung wird der Parser-Generator dazu verwendet, einen Parser für Programmiersprachen zu erzeugen, die wie C Präprozessor-Anweisungen enthalten. Die Erweiterungen gegenüber der normalen Darstellung von Programmen mit einem Syntaxbaum werden außerdem dazu verwendet, eine integrierte Darstellung der Struktur anzulegen.

Gemaß der Erfindung umfaßt das Verfahren für die automatische Syntaxanalyse eines Computer-Programmtextes, in dem bedingte Kompilierungsanweisungen enthalten sind, durch die sich mehrere Versionen eines Programms aus einem einzigen Quelltext ergeben, folgende Verfahrensschritte:

* Multiplexen und Synchronisieren mehrerer gleichzeitig aktiver Parser-Prozeduren, die einen gemeinsamen Eingabestrom des Textes bearbeiten;

* Abspalten einer neuen Parser-Prozedur beim Auftreten von bedingten Kompilierungsanweisungen im Eingabestrom, die darauf hinweisen, daß direkt nachfolgende Eingaben eine Variante aus einer Vielfachheit von möglichen Programmvarianten darstellen, als ParseFork-Operation;

* Austausch einer Parser-Prozedur, die einem Verzweigungspfad der bedingten Compilierungsanweisung zugeordnet ist, durch die Parser-Prozedur des anderen Verzweigungspfads der bedingten Kompilierungsanweisung als ParseExchange-Operation;

* Zusammenführen von zwei zuvor aufgespaltenen Parser-Prozeduren, falls alle Kriterien für eine Zusammenführung erfüllt sind, als ParseJoin-Operation, sowie

* Festlegen der Reihenfolge der Shift-Reduktions-Operationen in den miteinander synchronisierten Parser-Prozeduren.

Weiterbildungen dieses Verfahrens bezüglich der Steuerung der Abspaltung einer Parser-Prozedur, der Durchführung von Reduktionen, der Zusammenführung von aufgespaltenen Parser-Prozeduren sowie des gesamten Verfahrensablaufes ergeben sich aus den weiteren Ansprüchen.

Die Funktionsweise der Erfindung wird nachfolgend anhand eines in der Zeichnung dargestellten Ausführungsbeispieles erläutert:

FIG 1    zeigt einen Ausschnitt aus einem C-Programm mit einer bedingten Kompilierung und dem entsprechenden abstrakten Syntaxbaum, der sich ergibt. wenn das Präprozessor-Symbol CONTROL definiert ist (linker Teil) und wenn es nicht definiert ist (rechter Teil). und

FIG 2    stellt den abstrakten Syntaxgraphen für das Beispiel in FIG 1 dar.

An der Zeichnung kann man erkennen. daß durch die Tatsache. daß sich durch bedingte Kompilierungsanweisungen mehrere Versionen aus einem Programmmodul ergeben, Methoden erforderlich sind, mit denen mehrere Versionen eines Programms von einem Parser analysiert und die einzelnen Versionen zusammen in einer Struktur dargestellt werden können.

Für die Ausführung der vorliegenden Erfindung, ist ein LALR-Modul besonders geeignet, und zwar wegen der Allgemeinheit des Shift-Reduktion-Parser-Modells. wegen der ausgereiften C-Tools. die mit Parser-Generatoren, wie YACC und Bison erstellt wurden. wegen der Anforderung. daß diese Tools die Präprozessor-Anweisungen verarbeiten, sowie wegen der Umgebung, in der sich der analysierte Code befindet, der eine sauber getrennte Lösung ermöglichte.

Um die bedingte Kompilierung im aktuellen Modell zu verarbeiten, wird ein veränderter LALR-Parser-Treiber verwendet, damit die gleichzeitig synchron erfolgende Analyse eines einzigen Eingabestroms von Token durchgeführt werden kann. Das erweiterte Parser-Modell umfaßt die folgenden drei Operationen, die jeweils mit einer anwendungsspezifischen Rücksprung-Routine verbunden sind und zum Erstellen der abstrakten Syntaxgraphen verwendet werden.

**ParseFork:** spaltet eine neue Parser-Prozedur ab, wenn eine Anweisung wie **#ifdef**, **#ifndef** oder **#if** im Eingabestrom angetroffen wird. Während der Abspaltung wird der aktuelle Zustand des Parsers kopiert. Dazu zählen der Status-Stack und der Werte-Stack. Der Zeiger auf den Eingabestrom wird von allen Parser-Prozeduren gemeinsam verwendet.

**ParseJoin:** versucht eine Zusammenführung von zwei Parser-Prozeduren, wenn eine **#endif**-Anweisung im Eingabestrom angetroffen wird. Die beiden Verzweigungen einer Parser-Prozedur können nicht immer sofort zusammengeführt werden, da die Parser-Prozeduren unter Umständen die Kritierien für eine Zusammenführung nicht erfüllen. Deshalb wird die Zusammenführung der beiden Parser-Prozeduren solange verschoben, bis beide Parser-Prozeduren alle Kriterien für die Zusammen-führung erfüllen. Wenn Parser-Prozeduren für eine Zusammenführung anstehen, bleiben mehrere Parser-Prozeduren aktiv (lesen also auch weiterhin den Eingabestrom), bis die beiden Parser-Prozeduren zusammengeführt werden können. Die Rücksprung-Routine wird in diesem Fall erst zum Zeitpunkt der Zusammenführung aufgerufen. Die Verschiebung der Zusammenführung der Parser-Prozeduren ist eines der schwierigsten Probleme, die sich stellen, was nachfolgend ausführlich besprochen wird.

**ParseExchange:** tauscht zwei Verzweigungen einer aufgespaltenen Parser-Prozedur aus. Diese Operation wird vorgenommen, wenn eine Anweisung wie **#else** oder **#elif** im Eingabestrom als Token angetroffen wird. Die aktuell ausgeführte Parser-Prozedur wird ausgesetzt und die zu diesem Zeitpunkt ausgesetzten Parser-Prozeduren werden nach einer **#else**- oder **#elif**-Anweisung aktiviert und für die Aufnahme von Token vorbereitet.

Der Parser-Algorithmus ist eine dahingehende Abwandlung des standardmäßigen LALR-Algorithmus, einen einzigen Eingabestrom in mehreren Parser-Prozeduren verarbeiten zu können. Der nachstehend angegebene Algorithmus besteht aus zwei Prozeduren: einer Parser-Verwaltung und einem modifizierten LALR-Treiber.

Die Parser-Verwaltung multiplext den Eingabestrom und bestimmt, welche Parser-Prozedur durch den LALR-Treiber laufen soll. Der Status der einzelnen Parser-Prozeduren wird in einer Status-Variablen in der Parser-Verwaltung festgehalten. Der Status kann folgende Einstellungen haben:

**Active** gibt an, daß die Parser-Prozedur das aktuelle Token aus dem Eingabestrom entgegennehmen darf.

**BlockedOnInput** gibt an, daß das aktuelle Token von der Parser-Prozedur bereits erkannt wurde und keine weiteren Operationen durchgeführt werden können, da die anderen aktiven Parser-Prozeduren bereits darauf warten, das aktuelle Token zu verarbeiten.

**Sleeping gibt** an, daß eine Parser-Prozedur ausgesetzt wurde, da sie nichts mit dem aktuellen Eingabestrom zu tun hat. Diese Situation tritt dann ein, wenn eine Verzweigung einer bedingten Compilierungsanweisung verarbeitet wird und die andere Verzweigung auf die entsprechende **#else**- oder **#endif**-Anweisung wartet.

Ein wesentlicher Bestandteil der Parser-Verwaltung und des modifizierten LALR-Treibers ist der Mechanismus und die Bedingungen für die Zusammenführung der aufgespaltenen Parser-Prozedur. An jeder Verzweigungsstelle wird ein Zeiger auf die Spitze des Status-Stacks mitgeführt. Dieser Zeiger zeigt auf den letzten Status, den die beiden Parser-Prozeduren vor der Aufspaltung gemein hatten. Wenn also an einer Stelle, an der noch die Verarbeitung einer **#endif**-Anweisung oder eine Zusammenführung ansteht, eine Reduktion durchgeführt wird, die dazu führt, daß der Status-Stack unter die Stelle mit der Verzweigung rutscht, muß der Zeiger angepaßt werden, um auf die nächste Stelle zu verweisen, an der die beiden Parser-Prozeduren wieder zusammengeführt werden könnten. Für diese Zeiger wird ein Stack verwendet, um Verschachtelungen von bedingten Kompilierungsanweisungen verarbeiten zu können.

Für eine geordnete Zusammenführung müssen eine Reihe von Kriterien erfüllt sein. Jede Parser-Prozedur hat einen Status-Stack und einen Werte-Stack, die von Aktionsroutinen verwendet werden und aufeinander abgestimmt sind. Zwei Parser-Prozeduren lassen sich dann sicher zusammenführen, wenn keine Informationen bei der Zusammenführung verlorengehen können. Das bedeutet, daß die beiden Parser-Prozeduren zusammengeführt werden können, wenn sie den gleichen Status-Stack besitzen und durch die Zusammenführung keine Werte auf dem Werte-Stack verlorengehen.

Die Kriterien für eine sichere Zusammenführung lauten: p und p' seien zwei aufgespaltene Parser-Prozeduren. f und f' sind Zeiger auf die oberste Position des Status-Stacks, der in beiden Parser-Prozeduren gemeinsam vorkommt. t und t' sind Zeiger auf die aktuellen Zeiger der jeweiligen Spitze des Status-Stacks. Schließlich sei $s_1$, $s_2$ ... $s_f$ ... $s_t$ der eine Status-Stack, während $s'_1$, $s'_2$ ... $s'_{f'}$ ... $s'_{t'}$ den anderen Status-Stack beschreibt. $v_1$, $v_2$ ... $v_f$ ... $v_t$ ist der eine Werte-Stack und $v'_1$, $v'_2$ ... $v'_{f'}$ ... $v'_{t'}$ der andere. $v'_2$ ... $v'_{f'}$ ... $v'_{t'}$ der andere.

Wenn folgende Bedingungen erfüllt sind, können die beiden Parser-Prozeduren zusammengeführt werden:

1. Die zugehörige **#endif**-Anweisung wurde verarbeitet.
2. $f = f'$
3. $s_{f+1} = s'_{f'+1}$
4. $t = f + 1$
5. $t' = f' + 1$

Ein informeller Beweis für diese Angaben wäre: Punkt 1 ist per Definition erforderlich.

Punkt 2 und Punkt 3 stellen sicher, daß die beiden Parser-Prozeduren vom Anfang des Stacks bis zur Stelle $s_f$ und $s'_{f'}$ identisch sind. Dazu erinnert sei, daß f und f' immer auf die höchste Position auf dem Stack zeigen, bis zu der die beiden Parser-Prozeduren gleich sind. Diese Invariante wird während der gesamten Zeitdauer einer aufgespaltenen Parser-Prozedur beibehalten, indem f zum Zeitpunkt der Aufspaltung auf den Wert t gesetzt wird. Es kann sein, daß f sofort nach der Durchführung einer Reduktion in beiden Parser-Prozeduren auf t-1 gesetzt werden muß. Demzufolge sind beide Stacks in den Positionen 1 ... f + 1 identisch. Da die beiden Parser-Prozeduren daraufhin einen gemeinsamen Eingabestrom verarbeiten, weisen sie im weiteren Verlauf dieselben Zustände auf.

Punkt 4 und 5 garantieren, daß oberhalb des gemeinsamen Anteils ein Wert auf dem Werte-Stack steht. Da eine Zusammenführung durch eine Verschmelzung dieser beiden Werte zu einem gemeinsamen Wert erzeugt wird, gehen keine Informationen verloren.

Die obigen Bedingungen sind hinreichend. Es wird darüber hinaus angenommen, daß sie notwendig sind.

Die Verarbeitungsschritte lauten:

1. Anlegen einer ersten Parser-Prozedur und deren Status auf BlockedOnInput setzen.
2. Solange weitere Parser-Prozeduren vorhanden sind:

   (a) Wenn keine Parser-Prozedur mehr aktiv ist (d.h. alle Parser-Prozeduren haben das aktuelle Token geprüft), wird das nächste Token eingelesen und alle Parser-Prozeduren, die sich im Status BlockOnInput befinden, werden auf den Status Active gesetzt.

   (b) Solange das aktuelle Token eine Präprozessor-Anweisung ist:

      i. Wenn das aktuelle Token eine **#if**-, **#ifdef**- oder **#ifndef**-Anweisung ist, wird die aktuelle Spitze des Status-Stacks für jede aktive Parser-Prozedur aufgezeichnet, indem ein Zeiger auf die aktuelle Spitze des Status-Stacks auf den ForkPtrStack gelegt wird. Damit kann später festgestellt werden, wann sich die beiden Parser-Prozeduren wieder zusammenführen lassen. Die Parser-Prozeduren werden anschließend kopiert und die kopierten Parser-Prozeduren werden in den Zustand Sleeping gesetzt.

      ii. Wenn das aktuelle Token eine **#else**-Anweisung ist, wird die Operation ForkExchange aufgerufen. Aktive Parser-Prozeduren werden ausgesetzt, und die Parser-Prozeduren, die bei dieser **#else**-Anweisung ausgesetzt waren, werden aktiviert.

      iii. Wenn es sich beim aktuellen Token um eine **#endif**-Anweisung handelt, werden alle Parser-Prozeduren aktiviert, die bei dieser **#endif**-Anweisung ausgesetzt waren. Anschließend wird versucht, die beiden zuvor getrennten Parser-Prozeduren wieder miteinander zu verbinden. Die beiden Parser-Prozeduren können miteinander verbunden werden, wenn die Kriterien für eine sichere Zusammenführung erfüllt sind. Falls die beiden Parser-Prozeduren nicht zusammengeführt werden können, da sie in unterschiedlichen Konfigurationen vorliegen, vermerkt die Parser-Verwaltung, daß eine Zusammenführung offen ist. Falls die Zusammenführung stattfindet, wird ein Wert vom ForkPtrStack entfernt und eine der beiden Parser-Prozeduren wird beendet.

      iv. Nächstes Token einlesen.

   (c) Abschließend wählt die Parser-Verwaltung die aktive Parser-Prozedur mit dem höchsten Status-Stack aus und führt die ausgewählte Parser-Prozedur durch einen Iterationszyklus des LALR-Treibers.

Das Ziel in Schritt 2c ist die Zusammenführung zweier Parser-Prozeduren, um die durch eine bedingte Kompilierungsanweisung verursachten Unterschiede zwischen zwei Parser-Prozeduren so gering wie möglich zu halten. Da sich eine Parser-Prozedur in einem Zustand befinden kann, in dem sie nicht mehr aufeinanderfolgend reduziert werden kann, ohne daß zwischendurch ein Shift erfolgt, muß man darauf achten, daß die Reduktionsoperationen in den Parser-Prozeduren in einer heuristisch festzustellenden Reihenfolge abgesetzt werden, damit die Zusammenführung so früh wie möglich vorgenommen werden kann. Diese heuristische Methode, die für die Beispielausführung mit der C-Grammatik sehr gut funktioniert, wählt die Parser-Prozedur mit dem höchsten Status-Stack aus. Wenn die beiden Status-Stacks gleich hoch sind, wird die Parser-Prozedur ausgewählt, deren Bearbeitung am weitesten zurückliegt. Diese Strategie sorgt dafür, daß die Status-Stacks der ausgewählten Parser-Prozeduren näher an das Niveau der anderen aktiven Parser-Prozeduren heranrücken und somit keine Planung des Reduktionsablaufs erforderlich ist, wie dies zum Ermitteln für eine optimale Reduktionsstrategie erforderlich ist.

Der modifizierte LALR-Treiber

Diese Prozedur wird von der Parser-Verwaltung aufgerufen, um die ausgewählte Parser-Prozedur in einem Shift-Reduktions-Schritt zu verarbeiten. Der LALR-Treiber wurde von Aho, Sethi und Ullman, Compilers: Principles, Techniques, and Tools, Addison-Wesley, Reading, MA. 1986, übernommen. Der modifizierte Treiber unterscheidet sich von diesem dadurch, daß der Status-Stack nur Zustände enthält und er nur auf die aktuell ausgewählte Parser-Prozedur angewendet wird. Der Algorithmus lautet:

1. Wenn action[CurState,token] = shift s, s auf den Status-Stack legen und den Status von Active in BlockedOnInput umwandeln.

2. Wenn action[CurState,token] = reduce A -> ß, dann reduce A -> ß. Die Reduktion wurde geringfügig modifiziert, um mehrere Parser-Prozeduren miteinander zu verbinden:

(a) Bei jedem Grammatiksymbol im String ß wird ein Element vom Status-Stack genommen.

(b) Wenn eine Parser-Zusammenführung ansteht und die Höhe des Status-Stack unterhalb des Wertes liegt, der an der Spitze von ForkPtrStack liegt, wird der Zeiger angepaßt, der an der Spitze von ForkPtrStack liegt, um auf den aktuellen Status-Stack zu verweisen.

(c) Wenn eine Parser-Zusammenführung ansteht und die beiden Parser-Prozeduren die Kriterien für eine sichere Zusammenführung erfüllen, werden sie zusammengeführt. Sobald die Zusammenführung abgeschlossen ist, wird der oberste Wert von ForkPtrStack geholt.

(d) CurState auf Goto[CurState,A] setzen und CurState auf den Status-Stack legen.

3. Wenn action[CurState,token] = accept, ist die Parser-Prozedur abgeschlossen.

4. Wenn action[CurState,token] = error, wird die Parser-Prozedur verworfen.

**Die Darstellung echter C-Programme**

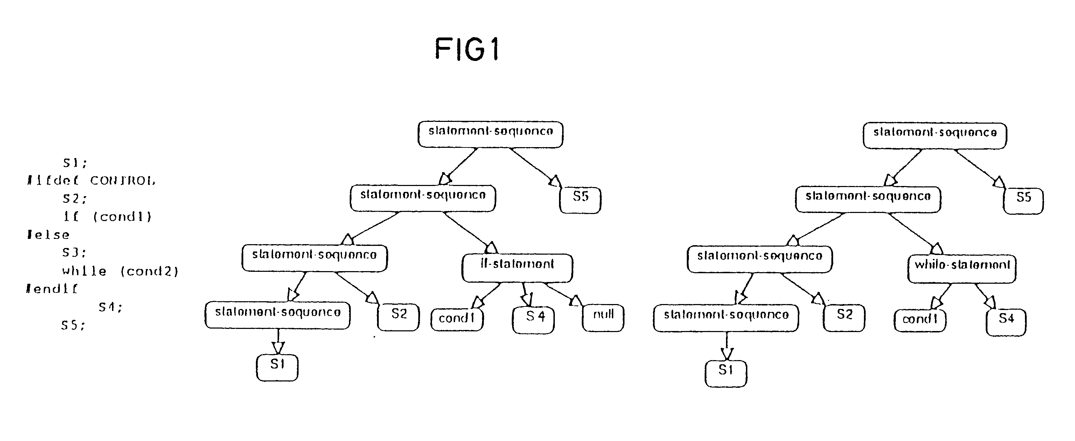

Mit dem Parsen von C-Programmen unter Erhalt der Präprozessor-Informationen hat man nur die Hälfte des Problems gelöst. Die andere Hälfte der Aufgabe ist die Darstellung dieser Informationen in einem abstrakten Syntaxbaum. Der schwierigste Punkt betrifft die Probleme durch die bedingte Kompilierung. Wie in FIG 1 gezeigt, ergeben sich durch die bedingte Kompilierung mehrere Versionen eines Programms aus einem Quelltext. Ein einfacher Ansatz zur Darstellung dieser verschiedenen Versionen wäre die Einführung eines Knotens im abstrakten Syntaxbaum, der den bedingt kompilierten Code darstellt. Dieser Knoten hätte zwei weitere Unterbäume als Nachfolger, jeweils einen Unterbaum für jede Alternative einer **#ifdef**-Anweisung. Diese Unterbäume würden durch die aufgespaltenen Parser-Prozeduren erzeugt und durch eine ParseJoin-Operation würde der Knoten über einen Verbindungsknoten **Join** mit seinen Nachfolgern verbunden. Dies ist jedoch nicht so einfach, wie es scheint. Es ergeben sich folgende Probleme:

\* Da ein LALR-Parser verwendet wird, können Reduktionen und die damit verbundenen Aktionen nur Bottom-Up (nach Analyse aller Syntax-Details) durchgeführt werden, so daß sich eine Parser-Prozedur mit einer rechtsorientierten Ableitung in umgekehrter Reihenfolge ergibt. Noch problematischer wird die Angelegenheit dadurch, daß die Implementierung »links-rekursive« Grammatikregeln begünstigt. Zum Beispiel:

list :     item
           list ',' item
           ;

Dies wird zu einem Problem, wenn wir versuchen, Bäume mit gemeinsamen Vorfahren miteinander zu verknüpfen. Wenn zum Beispiel in einer Anweisungsfolge mit zehn Elementen das letzte Element bedingt kompiliert wird, enthalten die beiden Syntaxbäume Kopien des Unterbaums der ersten neun Anweisungen der Folge. Diese Wiederholung ist natürlich sehr verschwenderisch.

\* In gleicher Weise ergibt sich beliebig viel Code, wenn die Schritte für eine **#endif**-Anweisung in den Nachfolgern eines Verbindungsknotens dupliziert werden. Dieser Code ist nötig, um die syntaktischen Einheiten zu vervollständigen, die innerhalb von **#ifdef** anfangen. Anweisung S4 in Abbildung 1 verdeutlicht diesen Fall. Die Kopie dieses Codes würde den Teil, der bedingt kompiliert wird, nur sehr ungenau darstellen.

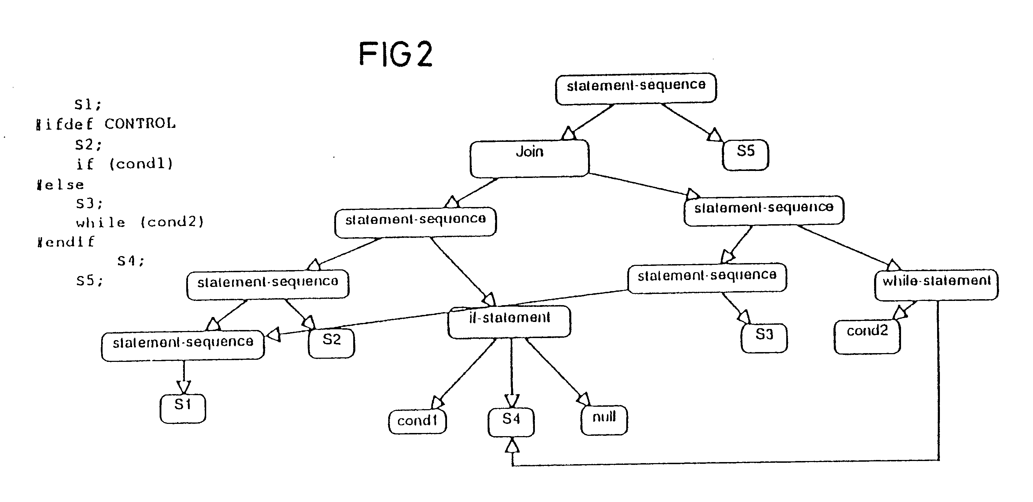

Diese und viele Probleme ergeben sich wegen der Wiederholungen, die durch eine baumartige Darstellung erforderlich werden. Dies läßt sich durch diese Erfindung lösen, indem man eine Darstellung wählt, die auf Graphen basiert, die im weiteren Verlauf als abstrakte Syntaxgraphen (ASG) bezeichnet werden. Anstelle der Verdoppelung gemeinsamer Unterbäume, verweist man von mehreren Stellen aus auf eine gemeinsame Position. FIG 2 zeigt den abstrakten Syntaxgraphen für das Programm von FIG 1. Dabei ist zu beachten, daß der Verbindungsknoten **Join** eingefügt wurde, um die Stelle zu markieren, an der die Parser-Prozeduren wieder zusammenlaufen. Die Nachfolger dieses Knotens repräsentieren die beiden Hälften der **#ifdef**-Anweisung. Die Knoten der Anweisungsfolge direkt über S1 und die Anweisung S4 kommen in beiden Nachfolgern vor. Obwohl eine Darstellung in Form eines Graphen etwas schwieriger zu durchwandern ist, gibt sie die Struktur des ursprünglichen Programms exakt wieder.

Die Erzeugung dieser Darstellung erfordert die Behandlung von drei Problemen:

1. Die Prozedur muß einen Knoten für die Verbindung aufbauen und sicherstellen, daß alle Knoten, die Code aus der bedingten Kompilierung darstellen, Nachfolger dieses Knotens sind.

2. Es müssen Verweise auf die Knoten erzeugt werden, in denen der gemeinsame Code dargestellt wird, bevor man bei einer **#ifdef**-Anweisung wieder zu den ursprünglichen Knoten zurückkehrt.

3. Dasselbe ist für Knoten zu bewerkstelligen, die den Code nach der **#endif**-Anweisung darstellen.

Diese Probleme werden mit Hilfe eines Werte-Stacks gelöst. Jeder Eintrag auf dem Werte-Stack ist ein Zeiger auf einen Knoten im abstrakten Syntaxgraphen. Findet während des Parsens eine Reduktion statt, wird die entsprechende Aktionsroutine ausgeführt. Diese Routine nimmt eine Reihe von Einträgen vom Werte-Stack und erzeugt einen neuen Knoten, der die vom Stack heruntergeholten Zeiger enthält. Anschließend wird ein Zeiger auf diesen Knoten auf den Werte-Stack gelegt. Diese Methode wird von LALR-Parsern standardmäßig unterstützt.

Das Anlegen des Verbindungsknotens **Join** an der richtigen Stelle liegt außerhalb der Kriterien für die Zusammenführung von Parser-Prozeduren. Der Verbindungsknoten **Join** wird in einer Rücksprung-Routine erzeugt, die bei der Zusammenführung zweier Parser-Prozeduren aufgerufen wird. Die obersten Einträge des Werte-Stacks der beiden zusammengeführten Parser-Prozeduren verweisen auf Untergraphen, die den Code darstellen, der im **#if**- bzw. **#else**-Abschnitt liegt. Alles, was unterhalb dieser Einträge liegt, lag bereits vor, als die Parser-Prozeduren aufgespalten wurden. Da sich die Parser-Prozeduren an dieser Stelle in identischen Zuständen befinden, müssen die Knotentypen am Ausgangspunkt dieser Unterbäume gleich sein. Die Knoten können durch einen einzigen Verbindungsknoten **Join** ersetzt werden, der auf die Unterbäume verweist.

Die Verbindung der Knoten durch Verweise zum Darstellen der gemeinsamen Code-Abschnitte vor einer **#ifdef**-Anweisung liegt ebenfalls außerhalb der Parser-Prozedur. Da die Einträge auf den Werts-Stacks nur Verweise auf Knoten im abstrakten Syntaxgraphen darstellen und selbst keine Knoten sind, werden durch das Kopieren des Werte-Stacks während der Aufspaltung einer Parser-Prozedur keine Kopien von Knoten angelegt. Es werden lediglich Kopien der Knotenverweise erzeugt. Wenn also die Reduktionen in den abgespaltenen Parser-Prozeduren stattfinden, enthalten die erstellten Knoten nur kopierte Verweise, und keine Kopien der Knoten selbst.

Derselbe Vorgang für die Knoten hinter der **#endif**-Anweisung gestaltet sich wesentlich schwieriger. Die vorliegende Parser-Strategie unterstützt dies nicht. Für die Realisierung benötigt man eine Kommunikationsmöglichkeit zwischen den abgespaltenen Parser-Prozeduren, damit Informationen über die Zustände ausgetauscht werden können, in denen sich die Parser-Prozeduren befinden. Momentan ist dieses Problem noch nicht gelöst. Letztlich wird ein Graph erzeugt, indem die **#endif**-Anweisung auf den Verbindungsknoten **Join** des abstrakten Syntaxgraphen kopiert wird. Semantisch gesehen enthält der erzeugte Graph alle Informationen des ursprünglichen Programms; es ist jedoch eine platzsparendere Darstellung möglich.

Ein weiteres Problem ergibt sich bei der Berücksichtigung der Präprozessor-Informationen von Makrodefinitionen in der Darstellung von C-Programmen. Es wäre wünschenswert, wenn man beide Formen eines Makros, vor und nach der Ersetzung des Aufrufs, im abstrakten Syntaxgraphen darstellen könnte. Dies ist aber nicht immer möglich, da das Ergebnis einer Makro-Ersetzung nicht notwendigerweise syntaktisch abgeschlossen sein muß, d.h. es muß sich nicht unbedingt ein Unterbaum des abstrakten Syntaxgraphen ergeben. Wir haben einen Kompromiß entwickelt, um dieses Problem zu lösen. Der Anwender hat zwei Alternativen. In der ersten Alternative werden die Abschnitte des abstrakten Syntaxgraphen, die sich aus der Ersetzung eines Makros ergeben, markiert, es wird aber nicht versucht, die Aufruf ohne Ersetzung darzustellen. Wenn der Anwender jedoch garantieren kann, daß keine syntaktisch unvollständigen Makros vorkommen, wird derselbe Mechanismus verwendet, um die ersetzten und die nicht ersetzten Formen von Makros darzustellen. Ein eigener Parser erzeugt mit Hilfe der cpp-Grammatik einen Unterbaum für die nicht ersetzte Form. Der Hauptparser wird aufgespalten und mit dem ersetzten Text versorgt. Anschließend wird mit ParseJoin eine Zusammenführung signalisiert, in der ein Verbindungsknoten **Join** mit nur einem Nachfolger angelegt wird. Anschließend wird der Unterbaum mit der nicht ersetzten Form des Makros eingebunden. Der Verbindungsknoten **Join** wird mit Attributen versehen, die anzeigen, daß es sich um das Ergebnis eines Makro-Aufrufs handelt, und nicht um eine bedingte Kompilierung.

Die übrigen Eigenschaften des C-Präprozessors, die noch dargestellt werden müssen, wie **#include**, **#define**, Kommentare, usw., werden durch Attribute der Knoten des Graphs behandelt. Da diese Eigenschaften an einer beliebigen Stelle im Programm auftreten können, ist es nicht möglich, sie in Form von Knoten innerhalb des abstrakten Syntaxgraphen darzustellen. Aus Platzgründen taucht im Beispiel keine Übernahme einer Datei mit Hilfe der **#include**-Anweisung auf. Da Include-Dateien üblicherweise für Deklarationen verwendet werden, wird lediglich die Information der Symboltabelle aus der Include-Datei übernommen.

**Ansprüche**

1. Verfahren für die automatische Syntaxanalyse (Parsen) des Textes von Computer-Programmen in Kompilierern und entsprechenden Einrichtungen, wobei der Text bedingte Kompilierungsanweisungen enthält, aus denen sich mehrere Versionen eines Programms aus einem einzigen Text ableiten,
   **gekennzeichnet durch**
   - Multiplexen und Synchronisieren mehrerer gleichzeitig aktiver Parser-Prozeduren, die einen gemeinsamen Eingabestrom des Textes verarbeiten;
   - Abspalten einer neuen Parser-Prozedur beim Auftreten von bedingten Kompilierungsanweisungen im Eingabestrom, die anzeigen, daß direkt nachfolgende Eingaben eine Variante aus einer Vielzahl von möglichen Programmvarianten darstellen, als ParseFork-Operation;
   - Zusammenführen von zwei zuvor aufgespalteten Parser-Prozeduren, falls alle Kriterien für eine Zusammenführung erfüllt sind , als ParseJoin-Operation, sowie
   - Festlegen der Reihenfolge der Shift-Reduktions-Operationen in einem LR-Treiber für die miteinander synchronisierten Parser-Prozeduren.

2. Verfahren nach Anspruch 1,
   **gekennzeichnet durch** den Austausch einer Parser-Prozedur, die einem Verzweigungspfad der bedingten Kompilierungsanweisung zugeordnet ist, durch die Parser-Prozedur des anderen Verzweigungspfads der bedingten Kompilierungsanweisung als ParseExchange-Operation.

3. Verfahren nach Anspruch 2,
   **dadurch gekennzeichnet,** daß nach Auftreten einer bedingten Kompilierungsanweisung im Eingabe strom eine neue Parser-Prozedur abgespalten wird und eine Kopie des aktuellen Parser-Status gespeichert wird, damit der Eingabestrom von mehr als einer Parser-Prozedur verarbeitet und später festgestellt werden kann, ob sich die beiden Parser-Prozeduren in einem Zustand befinden, in dem sie zusammengeführt werden können.

4. Verfahren nach Anspruch 3,
   **dadurch gekennzeichnet,** daß zwei zuvor aufgespaltene Parser-Prozeduren Reduktionen in heuristisch festgelegten Reihenfolge unterzogen werden, damit die beiden Parser-Prozeduren mit der kleinstmöglichen Anzahl an Shift-Reduktions-Operationen miteinander verbunden werden können.

5. Verfahren nach Anspruch 4,
   **dadurch gekennzeichnet,** daß jede Parser-Prozedur einen Status-Stack und einen Werte-Stack besitzt, die miteinander synchronisiert sind und daß, falls die zugehörige **#endif**-Anweisung angetroffen wird und beide aufgespaltenen Parser-Prozeduren identische Zustände aufweisen sowie im Werte-Stack gespeicherte Werte bei einer Zusammenführung nicht verloren gehen, alle Zusammenführungskriterien erfüllt sind und eine Zusammenführung vollzogen wird, ohne daß Informationen verlorengehen.

6. Verfahren nach einem der Ansprüche 1 bis 5,
   **gekennzeichnet durch** folgende Verfahrensschritte:
   i. Solange verarbeitbare Teile des Textes als Token zur Eingabe verfügbar sind: Auswahl des nächsten Tokens und Wirksamschalten aller Parser-Prozeduren, die von der Eingabe ausgeschlossen waren, so daß das neue Token von diesen Parser-Prozeduren verarbeitet werden kann.
   ii. Solange eine Parser-Prozedur für die Bearbeitung der aktuellen Eingabe verfügbar ist, Auswahl der nächsten verfügbaren Parser-Prozedur für die Verarbeitung des Tokens mit folgenden Operationen:
   A. Wenn action[CurState,token] = shift s, s auf den Status-Stack legen und diese Parser-Prozedur solange von der Verarbeitung ausschließen, bis alle anderen Parser-Prozeduren das aktuelle Token verarbeitet haben.
   B. Wenn action[CurState,token] = reduction $A \rightarrow \beta$, dann reduction $A \rightarrow \beta$ durchführen; in dem

1. bei jedem Grammatiksymbol im String ß ein Element vom Status-Stack genommen wird,

2. bei einer anstehenden Parser-Zusammenführung und Erfüllung der Kriterien für eine Zusammenführung der beiden betroffenen Parser-Prozeduren die beiden Parser-Prozeduren zusammengeführt werden und

3. CurState auf Goto[CurState,A] gesetzt und CurState auf den Stack gelegt wird.

C. Wenn action[CurState,token] = accept, ist die Parser-Prozedur abgeschlossen.

7. Verfahren nach Anspruch 6,
**gekennzeichnet durch** folgende Operation: Wenn action[CurState,token] = error, wird die Parser-Prozedur verworfen.

8. Verfahren nach einem der Ansprüche 1 bis 7,
**dadurch gekennzeichnet, daß** unter der Voraussetzung, daß

p und p' zwei aufgespaltene Parser-Prozeduren sind,
f und f' als Zeiger auf die oberste Position des Status-Stacks zeigen, der für beide Parser-Prozeduren zum Zeitpunkt der Spaltung gemeinsam gilt,
t und t' als laufende Zeiger auf die jeweilige Spitze der Status-Stacks beider Parser-Prozduren zeigen,
$s_1, s_2 \ldots s_f \ldots s_t$ den einen Status-Stack und $s'_1, s'_2 \ldots s'_{f'} \ldots s'_{t'}$ den anderen Status-Stack beschreiben
die Bedingungen für die Zusammenführung der beiden Parser-Prozeduren erfüllt sind, wenn gilt:

1. Die zugehörige **#endif**-Anweisung wurde verarbeitet.
2. f = f'
3. $s_{f+1} = s'_{f'+1}$
4. t = f + 1
5. t' = f' + 1

9. Verfahren nach einem der Ansprüche 1 bis 8,
**dadurch gekennzeichnet, daß** die **Parse-Fork**-Operation durch die Kompilierungsanweisungen **#ifdef**, **#ifndef** oder **#if** als Token im Eingabestrom ausgelöst wird, wobei der augenblickliche Parser-Zustand einschließlich des Werte- und Status-Stack der Parser-Prozedur kopiert wird und der Eingabezeiger von allen Parser-prozeduren gemeinsam verwendet wird, und
daß die **ParseExchange**-Operation durch die bedingten Kompilierungsanweisungen **#else** oder **#elif** als Token im Eingabestrom ausgelöst wird, wobei die augenblicklich ausgeführte Parser-Prozedur ausgesetzt wird, während die augenblicklich ausgesetzten Parser-Prozeduren aktiviert und für die Aufnahme von Token vorbereitet werden.

10. Verfahren nach Anspruch 9,
**dadurch gekennzeichnet, daß** jede Operation mit einer anwendungsspezifischen Rücksprung-Routine verbunden ist, die bei jeder Operation aufgerufen wird.

11. Verfahren nach Anspruch 9 und 10,
**dadurch gekennzeichnet, daß** die Operationen **ParseFork**, **ParseJoin** und **ParseExchange** vom LR-Treiber ausgeführt werden und daß bei der Ausführung einer **ParseJoin**-Operation und Vorliegen zweier wegen nicht identischer Zustände augenblicklich nicht zusammenführbarer Parser-Prozeduren die Zusammenführung aufgeschoben wird und mehrere Parser-Prozeduren aktiv bleiben, bis die Parser-Prozeduren zusammengeführt werden können, wobei die Rücksprung-Routine solange nicht aufgerufen wird, bis die Zusammenführung erfolgt.

12. Verfahren nach einem der Ansprüche 1 bis 11,
**dadurch gekennzeichnet, daß** eine Parser-Verwaltung den Eingabestrom des Programms multiplext und bestimmt, welche Parser-Prozedur durch den LR-Treiber laufen soll.

13. Verfahren nach Anspruch 12,
**dadurch gekennzeichnet, daß** der Zustand der einzelnen Parser-Prozeduren in einer Variablen in der Parser-Verwaltung festgehalten wird.

14. Verfahren nach Anspruch 13,
**dadurch gekennzeichnet, daß** folgende Zustände auftreten können:

- **Active**: Die Parser-Prozedur darf das aktuelle Token aus dem Eingabestrom entgegennehmen.
- **BlockedOnInput**: Das aktuelle Token wurde von der Parser-Prozedur bereits erkannt, und es können keine weiteren Operationen durchgeführt werden können, da die anderen aktiven Parser-Prozeduren bereits darauf warten, das aktuelle Token zu verarbeiten.
- **Sleeping**: Eine Parser-Prozedur wurde ausgesetzt, da sie nichts mit dem aktuellen Eingabestrom zu tun hat, weil eine Verzweigung einer bedingten Kompilierungsanweisung verarbeitet wird und die andere Verzweigung auf die entsprechende **#else**- oder **#endif**-Anweisung wartet.

# FIG1

EP 0 432 802 A2

```
        S1;
#ifdef CONTROL
        S2;
        if (cond1)
#else
        S3;
        while (cond2)
#endif
              S4;
        S5;
```

EP 0 432 802 A2

# FIG 2

```
    S1;
#ifdef CONTROL
    S2;
    if (cond1)
#else
    S3;
    while (cond2)
#endif
        S4;
    S5;
```

statement-sequence

Join — S5

statement-sequence — statement-sequence

statement-sequence — statement-sequence — while-statement

statement-sequence — S2 — if-statement — S3 — cond2

S1

cond1 — S4 — null